# EUROPEAN PATENT SPECIFICATION

(11) **EP 3 108 777 B1**
(45) Date of publication and mention of the grant of the patent: **27.11.2019**
(21) Application number: 16175650.7
(22) Date of filing: 22.06.2016
(51) Int. Cl.: A47J 31/52, A47J 31/00

(54) **METHOD FOR CONTROLLING A COFFEE MACHINE DISPENSING CYCLE**
VERFAHREN ZUR STEUERUNG EINES KAFFEEMASCHINENAUSGABEZYKLUS
PROCÉDÉ POUR COMMANDER UN CYCLE DE DISTRIBUTION DE MACHINE À CAFÉ

(30) Priority: 23.06.2015 IT UB20151584
(43) Date of publication of application: 28.12.2016
(73) Proprietor: De'Longhi Appliances S.r.l., 31100 Treviso (IT)
(72) Inventor: DE' LONGHI, Giuseppe, 31100 Treviso (IT); PANCIERA, Antonio, 31030 Carbonera (Treviso) (IT)
(74) Representative: Rapisardi, Mariacristina

(56) References cited:
- WO-A1-2015/055343
- US-A1- 2011 097 454
- US-A1- 2013 068 012

## Description

The present invention relates to a coffee machine and a method for controlling a dispensing cycle of a coffee machine comprising a pre-infusion step and an infusion step. Such a coffee machine and method is known from US2011/0097454.

Some types of known coffee machines for domestic and professional use now envisage a dispensing cycle comprising a pre-infusion step followed by an actual infusion step.

The pre-infusion step comprises in turn a first part of steeping the dose of ground coffee with a flow of water and a second part in which the flow of water is stopped before performing the infusion step for the necessary time for the water to be absorbed as uniformly as possible by the dose of ground coffee.

The pre-infusion step is used to prevent preferential paths of water forming through the dose of ground coffee during the infusion step.

Essentially, pre-infusion guarantees that infusion can proceed as correctly as possible and that the coffee thus dispensed has the desired organoleptic properties.

To perform the pre-infusion process, the ideal conditions are defined in literature, corresponding to 2.5 grams of pre-infusion water for every gram of coffee dose.

The limit of known pre-infusion processes often consists of their suitability to guarantee correct dispensing as the boundary conditions change.

In particular, the dispensing is significantly influenced by variables such as the degree of drying and particle size as well as the quantity of ground coffee.

For example drier coffee and coffee ground into large grains tend to become steeped more quickly than oilier coffee and coffee ground into finer grains.

Consequently, just the automatic selection of the quantity of pre-infusion water according to the weight of the coffee dose used in the dispensing cycle selected by the user is not sufficient to guarantee correct dispensing.

The technical task of the present invention is therefore to provide a coffee machine and a method for controlling a dispensing cycle that make it possible to eliminate the cited technical drawbacks of the prior art.

Within the context of this technical task an object of the invention is to provide a method for controlling a dispensing cycle of a coffee machine that enables correct dispensing as the boundary conditions vary.

The technical task, as well as these and other aims, according to the present invention are achieved by providing a method for controlling a dispensing cycle of a coffee machine, said dispensing cycle comprising a pre-infusion step and an infusion step, in a temporal sequence, said pre-infusion step comprising a first part, wherein a flow of steeping water is supplied to a dose of ground coffee, and a second part, wherein the flow of steeping water is interrupted so as to enable uniform absorption of the pre-infusion water by the steeped dose of ground coffee, said infusion step comprising a flow of infusion water supplied to the previously steeped dose of ground coffee, the method being characterized in that in a dispensing cycle, the coffee machine automatically detects data representative of the amount constituting the dose of ground coffee and/or the amount of infusion water dispensed and automatically sets the pre-infusion step for a subsequent dispensing cycle by means of an algorithm for processing said data detected in a previous dispensing cycle.

In an embodiment of the invention at least the total time value of the pre-infusion step is set automatically.

In an embodiment of the invention at least the time value of the first part and the time value of the second part of the pre-infusion step are set automatically.

In an embodiment of the invention at least the quantity value of pre-infusion water is set automatically.

In an embodiment of the invention a first operating mode of the coffee machine is envisaged wherein the automatic setting of the pre-infusion step is enabled, and a second operating mode of the machine wherein the manual customized setting of the pre-infusion step is enabled.

In an embodiment of the invention the algorithm comprises a direct correlation function of the total pre-infusion time and/or the pre-infusion time of the first and second part of the pre-infusion step with the amount constituting the dose of ground coffee.

In an embodiment of the invention the algorithm comprises an inverse correlation function of the total pre-infusion time and/or the pre-infusion time of the first and second part of the pre-infusion step with the amount constituting the dose of ground coffee.

In an embodiment of the invention the algorithm comprises a direct correlation function of the amount of pre-infusion water with the amount of infusion water dispensed.

In an embodiment of the invention the algorithm comprises an inverse correlation function of the amount of pre-infusion water with the amount of infusion water dispensed.

In an embodiment of the invention the algorithm comprises a correlation function of the total pre-infusion time and/or the pre-infusion time of the first and second part of the pre-infusion step with the amount constituting the dose of ground coffee and with the amount of infusion water dispensed.

In an embodiment of the invention the algorithm comprises a correlation function of the amount of pre-infusion water with the amount constituting the dose of ground coffee and with the amount of infusion water dispensed.

The present invention also discloses a coffee machine for executing a method for controlling a dispensing cycle, characterized in that it comprises a controller, a memory programmed with said calculation algorithm, at least one supply pump for supplying infusion water, at least one boiler for heating said water, an infusion unit having an infusion chamber for a dose of ground coffee, detection means for detecting the flow of infusion water, and detection means for detecting the amount constituting the dose of ground coffee.

In an embodiment of the invention the means for detecting the amount constituting the dose comprises a position sensor of the infusion chamber.

In an embodiment of the invention the flow detection means comprises a flow meter preferably positioned upstream of the supply pump.

Further characteristics and advantages of the invention will more fully emerge from the description of a preferred but not exclusive embodiment of the method for controlling the dispensing cycle of a coffee machine according to the invention, illustrated by way of indicative and non-limiting example in the accompanying drawings, in which:

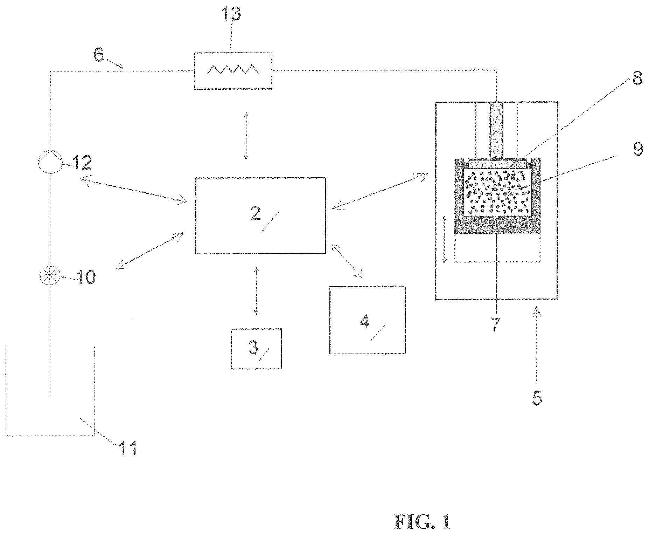

figure 1 shows a block diagram of the coffee machine;

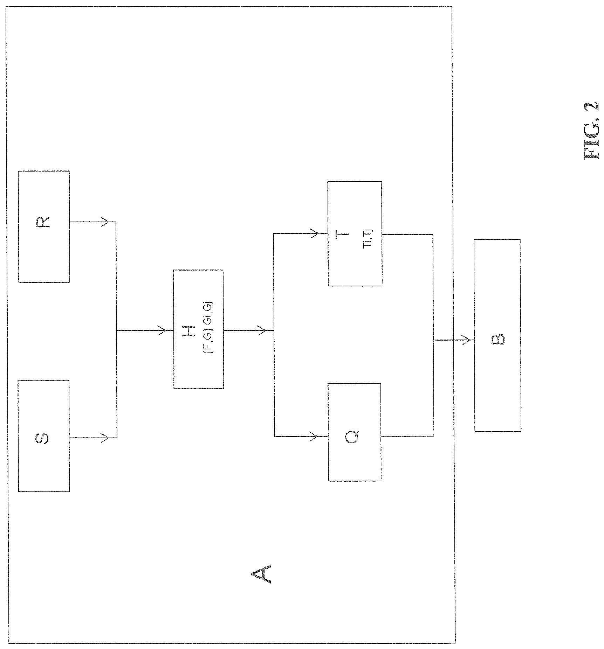

figure 2 shows a block diagram of the dispensing cycle.

With reference to the figures cited, a coffee machine is schematically shown and indicated in its entirety by reference number 1.

The coffee machine 1 comprises in a known way a controller 2, a memory 3, connected to the controller 2, an input/output interface 4 connected to the controller 2, an infusion unit 5 connected to the controller 2, and a hydraulic circuit 6 for supplying the infusion unit 5.

The infusion unit 5 comprises an infusion chamber 7 adapted to house a dose of ground coffee inside it, and a closing piston 8 for closing the infusion chamber 7.

The infusion chamber 7 and the closing piston 8 are mobile with respect to each other between a disengagement position for introducing a dose of new coffee 9 and the expulsion of the dose of used coffee 9, and an engagement position for the performance of a pre-infusion step and an infusion step.

The infusion chamber 7 has in a known way an outlet (not shown) for the infusion and an external coffee dispenser (not shown).

The closing piston 8 in a known way is connected to the supply circuit 6 and has an inlet (not shown) for the water into the infusion chamber 7.

By way of example the infusion chamber 7 has a roto-translatory movement wherein the rotary component of the motion is used to orient the infusion chamber 7 between a position suitable to receive a new dose of ground coffee and a coaxial position to the axis of the closing piston 8 suitable for coupling with the closing piston 8 itself.

The closing piston 8 in turn is supported in a retractably axial way in contrast to an elastic element between a rest position wherein it is disengaged from the infusion chamber 7 and a retracted position wherein it is engaged with the infusion chamber 7.

The supply circuit comprises a water tank 11, or alternatively a connection to the water mains, a supply pump 12 connected to the controller 2, and a boiler 13 connected to the controller 2.

Advantageously, for the reasons that will be explained more clearly below, the supply circuit also comprises flow detection means for detection the flow of water dispensed by the supply pump 12, in the form of a flow meter 10 positioned upstream of the supply pump 12 and connected to the controller 2.

Advantageously, for the reasons that will be explained more clearly below, detection means for detecting the amount constituting the dose of ground coffee 9 are also provided.

The amount constituting the dose of ground coffee 9 contained in the infusion chamber 7 univocally determines the closing position assumed by the infusion chamber 7. In fact, the higher the quantity constituting the dose of ground coffee 9 and therefore the taller the dose of ground coffee 9, the shorter the intersection stretch between the infusion chamber 7 and the closing piston 8 will be.

The detection means for detecting the amount constituting the dose of ground coffee 9 may therefore be in the form of a position sensor (not shown) of the infusion chamber 7: for example, a microswitch is provided in a fixed position connected to the controller 2 and positioned at a calibrated distance from the closing piston 8 in rest position. The microswitch can be activated by the closing piston 8 which retracts when it is pushed by the dose of ground coffee 9 contained in the infusion chamber 7 in the closing movement.

The controller 2 is programmed to stop the movement of the infusion chamber 7 when it receives the microswitch activation signal from the position sensor.

The dispensing cycle comprises in a temporal sequence a pre-infusion step A and an infusion step B.

The pre-infusion step comprises a first part in which the supply pump 12 is activated at constant rotation speed by the controller 2 so as to supply a flow of steeping water to the dose of ground coffee 9 and a second part in which the supply pump is deactivated by the controller 2 so as to interrupt the flow of steeping water and allow the uniform absorption of the pre-infusion water by the steeped dose of ground coffee 9.

In the infusion step the supply pump 12 is activated again at constant rotation speed so as to supply a flow of infusion water to the previously steeped dose of ground coffee 9.

Advantageously, a calculation algorithm H is stored in the memory 4 of the coffee machine 1, which automatically generates values for setting the dispensing cycle, in particular a value Q for setting the quantity of pre-infusion water and a value T for setting the time duration of the pre-infusion step.

The value T for setting the time duration of the pre-infusion step is in turn comprised of a value Ti for setting the time to perform the first part and a value Tj for setting the time to perform the second part of the pre-infusion step.

The calculation algorithm H operates on inlet calculation variables such as the quantity of infusion water dispensed R and the amount constituting the dose of ground coffee S.

In other solutions just one of the two variables or other additional variables to the aforementioned ones may be considered.

The calculation algorithm H can be updated whenever necessary.

Therefore, during a dispensing cycle the controller 2 acquires the value of the calculation variables R and S, and controls the performance of the calculation algorithm H which automatically processes the setting values Q, T, Ti, Tj for a subsequent dispensing cycle.

Essentially, during a dispensing cycle the controller 2 acquires the datum S from the position sensor, representative of the quantity constituting the dose of ground coffee and during the infusion step it also acquires the datum from the flow meter 10 and integrates it with the activation time of the supply pump 12 so as to derive the datum R representative of the quantity of infusion water dispensed. Then, the controller 2 performs the calculation algorithm H with these input data R, S so as to automatically calculate the setting values Q, T, Ti, Tj of a subsequent dispensing cycle.

The coffee machine 1 can advantageously operate by activating a relevant option through the input/output interface 4, in a first operating mode in which the automatic setting of the pre-infusion step is enabled, and a second operating mode in which the pre-infusion step can be set manually in customized mode.

The calculation algorithm H which generates the setting values of the pre-infusion step envisages separate functions F and respectively G, Gi Gj for calculating the setting values Q and respectively T, Ti, Tj.

The calculation functions F, G, Gi, Gj can define a direct or inverse correlation with the variables R, S.

Furthermore, the functions F, G which determine the setting values Q, T, Ti, Tj may depend on one or both of the variables R, S.

Therefore it may be that: Q=F(R, S) or Q=F(S) or Q=F(R); T=G(R, S) or T=G(S) or Ti=Gi(R), Ti=Gi(R, S) or Ti=Gi(S) or Ti=Gi(R); Tj=Gj(R, S) or Tj=Gj(S) or Tj=Gj(R)

For example, a direct proportionality function F may be defined between Q and R only or between Q and S only, or an inverse proportionality function F between Q and R only or between Q and S only, or even a specific function F that connects the trend of Q with both variables R and S.

Likewise, a direct proportionality function G may be defined between T and R only or between T and S only, or an inverse proportionality function G between T and R only or between T and S only, or even a specific function G that connects the trend of T with both variables R and S.

With the present invention an optimizable dispensing cycle is obtained by automatically changing the setting of the pre-infusion step according to the boundary conditions.

The boundary conditions comprise the particle size of the ground coffee, the amount constituting the dose of ground coffee and the type of coffee used.

The boundary conditions affect the dispensing cycle.

Thus, for example, the quantity of infusion water dispensed generally varies in an inversely proportional way to the amount of the dose of ground coffee and in a directly proportional way to the particle size of the ground coffee.

The boundary conditions may be deduced indirectly automatically using detection means appropriately installed in the coffee machine.

Such boundary conditions acquired for a dispensing cycle are therefore especially converted into input variables of a calculation algorithm used by the controller of the coffee machine for the automatic adaptation of the setting values of the pre-infusion step of a subsequent dispensing cycle.

The dispensing cycles can therefore be performed ensuring that the dose of ground coffee is uniformly steeped so as to prevent any preferential water paths arising during the infusion step.

The method for controlling a coffee machine for performing a dispensing cycle as conceived herein is susceptible to many modifications and variations, all falling within the scope of the invented concept; furthermore, all the details are replaceable by technically equivalent elements.

The materials used, as well as the dimensions, may in practice be of any type according to requirements and the state of the art.

## Claims

1. A method for controlling a dispensing cycle of a coffee machine (1), said dispensing cycle comprising a pre-infusion step and an infusion step, in a temporal sequence, said pre-infusion step comprising a first part, wherein a flow of steeping water is supplied to a dose of ground coffee (9), and a second part, wherein the flow of steeping water is interrupted so as to enable uniform absorption of the pre-infusion water by the steeped dose of ground coffee (9), said infusion step comprising a flow of infusion water supplied to the previously steeped dose of ground coffee (9), the method being **characterized in that** in a dispensing cycle, the coffee machine (1) automatically detects data (R, S) representative of the amount constituting the dose of ground coffee (9) and/or the amount of infusion water dispensed and automatically sets the pre-infusion step for a subsequent dispensing cycle by means of an algorithm (H) for processing said data (R, S) detected in a previous dispensing cycle.

2. The method for controlling a dispensing cycle of a coffee machine (1) according to claim 1, **characterized in that** at least the value for the total time (T) of the pre-infusion step is automatically set.

3. The method for controlling a dispensing cycle of a coffee machine (1) according to claim 1, **characterized in that** at least the time value (Ti) for the first part and the time value (Tj) for the second part of the pre-infusion step are automatically set.

4. The method for controlling a dispensing cycle of a coffee machine (1) according to claim 1, **characterized in that** at least the value for the quantity (Q) of pre-infusion water is automatically set.

5. The method for controlling a dispensing cycle of a coffee machine (1) according to claim 1, **characterized in that** it comprises a first operating mode of the coffee machine (1), wherein automatic setting of the pre-infusion step is enabled, and a second operating mode of the coffee machine (1), wherein customized manual setting of the pre-infusion step is enabled.

6. The method for controlling a dispensing cycle of a coffee machine (1) according to claim 1, **characterized in that** said algorithm (H) comprises a direct or inverse correlation function (G, Gi, Gj) that relates the total pre-infusion time (T) and/or the pre-infusion time (Ti, Tj) of the first and the second part of the pre-infusion step with the amount constituting the dose of ground coffee (S).

7. The method for controlling a dispensing cycle of a coffee machine (1) according to claim 1, **characterized in that** said algorithm (H) comprises a direct or inverse correlation function (F) that relates the quantity of pre-infusion water (Q) with the amount of infusion water dispensed (R).

8. The method for controlling a dispensing cycle of a coffee machine (1) according to claim 1, **characterized in that** said algorithm (H) comprises a correlation function that relates the total pre-infusion time (T) and/or the infusion time (Ti, Tj) of the first and the second part of the pre-infusion step with the amount constituting the dose of ground coffee (S) and with the amount of infusion water dispensed (R).

9. The method for controlling a dispensing cycle of a coffee machine (1) according to claim 1, **characterized in that** said algorithm (H) comprises a correlation function that relates the quantity of pre-infusion water (Q) with the amount constituting the dose of ground coffee (S) and with the amount of infusion water dispensed (R).

10. A coffee machine (1) for executing a method for controlling a dispensing cycle in accordance with any one of the preceding claims, **characterized in that** it comprises a controller (2), a memory (3) programmed with said calculation algorithm (H), at least one supply pump (12) for supplying infusion water, at least one boiler (13) for heating said water, an infusion unit (5) having an infusion chamber (7) for a dose of ground coffee (9), detection means for detecting the flow of infusion water, and detection means for detecting the amount constituting the dose of ground coffee (9).

11. The coffee machine (1) according to the preceding claim, **characterized in that** said detection means for detecting the amount constituting the dose comprises a position sensor of the infusion chamber (7).

12. The coffee machine (1) according to either claim 10 or 11, **characterized in that** said flow detection means comprises a flow meter (10).

13. The coffee machine (1) according to any one of claims 10 to 12, **characterized in that** it comprises interface means for interfacing with a user and configured for the selection of a first operating mode of the coffee machine, wherein automatic setting of the pre-infusion step is enabled, and a second operating mode of the machine, wherein customized manual setting of the pre-infusion step is enabled.

## Patentansprüche

1. Verfahren zur Steuerung eines Ausgabezyklus einer Kaffeemaschine (1), wobei der Ausgabezyklus einen Vorbrühschritt und einen Brühschritt in einer zeitlichen Abfolge umfasst, wobei der Vorbrühschritt einen ersten Teil umfasst, in dem eine Strömung von Einweichwasser einer Dosis von gemahlenem Kaffee (9) zugeführt wird und einen zweiten Teil, in dem die Strömung von Einweichwasser unterbrochen wird, um eine gleichmäßige Absorption des Vorbrühwassers durch die eingeweichte Dosis von gemahlenem Kaffee (9) zu aktivieren, wobei der Brühschritt eine Strömung von Brühwasser umfasst, die der zuvor eingeweichten Dosis von gemahlenem Kaffee (9) zugeführt wurde, wobei das Verfahren **dadurch gekennzeichnet ist, dass** die Kaffeemaschine (1) in einem Ausgabezyklus Daten (R, S) automatisch erfasst, die für die Menge, die die Dosis von gemahlenem Kaffee (9) bildet und/oder die Menge von ausgegebenem Brühwasser repräsentativ sind und den Vorbrühschritt für einen nachfolgenden Ausgabezyklus mittels eines Algorithmus (H) zur Verarbeitung der in einem vorherigen Ausgabezyklus erfassten Daten (R, S) automatisch einstellt.

2. Verfahren zur Steuerung eines Ausgabezyklus einer Kaffeemaschine (1) nach Anspruch 1, **dadurch gekennzeichnet, dass** mindestens der Wert für die Gesamtzeit (T) des Vorbrühschritts automatisch eingestellt wird.

3. Verfahren zur Steuerung eines Ausgabezyklus einer Kaffeemaschine (1) nach Anspruch 1, **dadurch gekennzeichnet, dass** mindestens der Zeitwert (Ti) für den ersten Teil und der Zeitwert (Tj) für den zweiten Teil des Vorbrühschritts automatisch eingestellt werden.

4. Verfahren zur Steuerung eines Ausgabezyklus einer Kaffeemaschine (1) nach Anspruch 1, **dadurch gekennzeichnet, dass** mindestens der Wert für die Menge (Q) von Vorbrühwasser automatisch eingestellt wird.

5. Verfahren zur Steuerung eines Ausgabezyklus einer Kaffeemaschine (1) nach Anspruch 1, **dadurch gekennzeichnet, dass** es einen ersten Betriebsmodus der Kaffeemaschine (1), in dem eine automatische Einstellung des Vorbrühschritts aktiviert ist, und einen zweiten Betriebsmodus der Kaffeemaschine (1) umfasst, wobei eine personalisierte manuelle Einstellung des Vorbrühschritts aktiviert wird.

6. Verfahren zur Steuerung eines Ausgabezyklus einer Kaffeemaschine (1) nach Anspruch 1, **dadurch gekennzeichnet, dass** der Algorithmus (H) eine direkte oder inverse Korrelationsfunktion (G, Gi, Gj) umfasst, die die gesamte Vorbrühzeit (T) und/oder die Vorbrühzeit (Ti, Tj) des ersten und des zweiten Teils des Vorbrühschritts mit der Menge, die die Dosis von gemahlenem Kaffee (S) bildet, in Beziehung setzt.

7. Verfahren zur Steuerung eines Ausgabezyklus einer Kaffeemaschine (1) nach Anspruch 1, **dadurch gekennzeichnet, dass** der Algorithmus (H) eine direkte oder inverse Korrelationsfunktion (F) umfasst, die die Menge von Vorbrühwasser (Q) mit der Menge von ausgegebenem Brühwasser (R) in Beziehung setzt.

8. Verfahren zur Steuerung eines Ausgabezyklus einer Kaffeemaschine (1) nach Anspruch 1, **dadurch gekennzeichnet, dass** der Algorithmus (H) eine Korrelationsfunktion umfasst, die die gesamte Vorbrühzeit (T) und/oder die Vorbrühzeit (Ti, Tj) des ersten und des zweiten Teils des Vorbrühschritts mit der Menge, die die Dosis von gemahlenem Kaffee (S) bildet, in Beziehung setzt.

9. Verfahren zur Steuerung eines Ausgabezyklus einer Kaffeemaschine (1) nach Anspruch 1, **dadurch gekennzeichnet, dass** der Algorithmus (H) eine Korrelationsfunktion umfasst, die die Menge von Vorbrühwasser (Q) mit der Menge, die die Dosis von gemahlenem Kaffee (S) bildet und mit der Menge von ausgegebenem Brühwasser (R) in Beziehung setzt.

10. Kaffeemaschine (1) zur Ausführung eines Verfahrens zur Steuerung eines Ausgabezyklus nach einem der vorhergehenden Ansprüche, **dadurch gekennzeichnet, dass** sie eine Steuerung (2), einen mit dem Berechnungsalgorithmus (H) programmierten Speicher (3), mindestens eine Zuführpumpe (12) zum Zuführen von Brühwasser, mindestens einen Kessel (13) zum Erhitzen des Wassers, eine Brüheinheit (5) aufweisend eine Brühkammer (7) für eine Dosis von gemahlenem Kaffee (9), Erfassungsmittel zum Erfassen der Brühwasserströmung und Erfassungsmittel zum Erfassen der Menge, die die Dosis von gemahlenem Kaffee (9) bildet, umfasst.

11. Kaffeemaschine (1) nach dem vorhergehenden Anspruch, **dadurch gekennzeichnet, dass** die Erfassungsmittel zum Erfassen der die Dosis bildenden Menge einen Positionssensor der Brühkammer (7) umfassen.

12. Kaffeemaschine (1) nach Anspruch 10 oder 11, **dadurch gekennzeichnet, dass** die Strömungserfassungsmittel einen Strömungsmesser (10) umfassen.

13. Kaffeemaschine (1) nach einem der Ansprüche 10 bis 12, **dadurch gekennzeichnet, dass** sie Schnittstellenmittel zur Schnittstellenbildung mit einem Benutzer umfasst und für die Auswahl eines ersten Betriebsmodus der Kaffeemaschine konfiguriert ist, wobei die automatische Einstellung des Vorbrühschritts und eines zweiten Betriebsmodus der Maschine aktiviert wird, in dem die personalisierte manuelle Einstellung des Vorbrühschritts aktiviert wird.

## Revendications

1. Procédé pour commander un cycle de distribution d'une machine à café (1), ledit cycle de distribution comprenant une étape de pré-infusion et une étape d'infusion, dans une séquence temporelle, ladite étape de pré-infusion comprenant une première partie, dans laquelle un flux d'eau de trempage est alimenté à une dose de café moulu (9), et une seconde partie, dans laquelle le flux d'eau de trempage est interrompu de manière à permettre l'absorption uniforme de l'eau de pré-infusion par la dose trempée de café moulu (9), ladite étape d'infusion comprenant un flux d'eau d'infusion alimenté à la dose préalablement trempée de café moulu (9), le procédé étant **caractérisé en ce que** dans un cycle de distribution, la machine à café (1) détecte automatiquement des données (R, S) représentatives de la quantité constituant la dose de café moulu (9) et/ou la quantité d'eau d'infusion distribuée et fixe automatiquement l'étape de pré-infusion pour un cycle de distribution suivant au moyen d'un algorithme (H) pour traiter lesdites données (R, S) détectées dans un cycle de distribution précédent.

2. Procédé pour commander un cycle de distribution d'une machine à café (1) selon la revendication 1, **caractérisé en ce qu'**au moins la valeur de la durée totale (T) de l'étape de pré-infusion est fixée automatiquement.

3. Procédé pour commander un cycle de distribution d'une machine à café (1) selon la revendication 1, **caractérisé en ce qu'**au moins la valeur de la durée (Ti) de la première partie et la valeur de la durée (Tj) de la seconde partie de l'étape de pré-infusion sont fixées automatiquement.

4. Procédé pour commander un cycle de distribution d'une machine à café (1) selon la revendication 1, **caractérisé en ce qu'**au moins la valeur de la quantité (Q) d'eau de pré-infusion est fixée automatiquement.

5. Procédé pour commander un cycle de distribution d'une machine à café (1) selon la revendication 1, **caractérisé en ce qu'**il comprend un premier mode de fonctionnement de la machine à café (1), dans lequel la fixation automatique de l'étape de pré-infusion est activée, et un second mode de fonctionnement de la machine à café (1), dans lequel la fixation manuelle personnalisée de l'étape de pré-infusion est activée.

6. Procédé pour commander un cycle de distribution d'une machine à café (1) selon la revendication 1, **caractérisé en ce que** ledit algorithme (H) comprend une fonction de corrélation (G, Gi, Gj) directe ou inverse mettant en relation la durée totale (T) de pré-infusion et/ou la durée de pré-infusion (Ti, Tj) de la première et de la seconde partie de l'étape de pré-infusion avec la quantité constituant la dose de café moulu (S).

7. Procédé pour commander un cycle de distribution d'une machine à café (1) selon la revendication 1, **caractérisé en ce que** ledit algorithme (H) comprend une fonction de corrélation (F) directe ou inverse mettant en relation la quantité d'eau de pré-infusion (Q) avec la quantité d'eau d'infusion (R) distribuée.

8. Procédé pour commander un cycle de distribution d'une machine à café (1) selon la revendication 1, **caractérisé en ce que** ledit algorithme (H) comprend une fonction de corrélation mettant en relation la durée totale (T) de pré-infusion et/ou la durée de pré-infusion (Ti, Tj) de la première et de la seconde partie de l'étape de pré-infusion avec la quantité constituant la dose de café moulu (S) et avec la quantité d'eau d'infusion (R) distribuée.

9. Procédé pour commander un cycle de distribution d'une machine à café (1) selon la revendication 1, **caractérisé en ce que** ledit algorithme (H) comprend une fonction de corrélation mettant en relation la quantité d'eau de pré-infusion (Q) avec la quantité constituant la dose de café moulu (S) et avec la quantité d'eau d'infusion (R) distribuée.

10. Machine à café (1) pour l'exécution d'un procédé de commande d'un cycle de distribution selon l'une quelconque des revendications précédentes, **caractérisée en ce qu'**elle comprend un contrôleur (2), une mémoire (3) programmée avec ledit algorithme de calcul (H), au moins une pompe de distribution (12) pour alimenter l'eau d'infusion, au moins une chaudière (13) servant à chauffer ladite eau, une unité d'infusion (5) comportant une chambre d'infusion (7) pour une dose de café moulu (9), des moyens de détection servant à détecter le flux d'eau d'infusion, et des moyens de détection pour détecter la quantité constituant la dose de café moulu (9).

11. Machine à café (1) selon la revendication précédente, **caractérisée en ce que** lesdits moyens de détection servant à détecter la quantité constituant la dose comprennent un détecteur de position de la chambre d'infusion (7).

12. Machine à café (1) selon la revendication 10 ou 11, **caractérisée en ce que** lesdits moyens de détection de flux comprennent un débitmètre (10).

13. Machine à café (1) selon l'une quelconque des revendications de 10 à 12, **caractérisée en ce qu'**elle comprend des moyens d'interface pour s'interfacer avec un utilisateur et configurés pour la sélection d'un premier mode de fonctionnement de la machine à café, dans lequel la fixation automatique de l'étape de pré-infusion est activée, et un second mode de fonctionnement de la machine, dans lequel la fixation manuelle personnalisée de l'étape de pré-infusion est activée.
